# EUROPÄISCHE PATENTSCHRIFT

(11) **EP 3 920 678 B1**
(45) Veröffentlichungstag und Bekanntmachung des Hinweises auf die Patenterteilung: **17.01.2024**
(21) Anmeldenummer: 20704790.3
(22) Anmeldetag: 03.02.2020
(51) Int. Cl.: A01B 69/00, A01B 79/00, G05D 1/02

(54) **VORRICHTUNG UND VERFAHREN ZUM SICHEREN BETREIBEN EINER AUTONOM BETREIBBAREN LANDWIRTSCHAFTLICHEN MASCHINE**
DEVICE AND METHOD FOR SAFELY OPERATING AN AUTONOMOUSLY OPERABLE AGRICULTURAL MACHINE
DISPOSITIF ET PROCÉDÉ POUR FAIRE FONCTIONNER EN TOUTE SÉCURITÉ UNE MACHINE AGRICOLE À FONCTIONNEMENT AUTONOME

(30) Priorität: 05.02.2019 DE 102019000792
(43) Veröffentlichungstag der Anmeldung: 15.12.2021
(73) Patentinhaber: ZF Friedrichshafen AG, 88046 Friedrichshafen (DE); Horsch Maschinen GmbH, 92421 Schwandorf (DE); HORSCH LEEB Application Systems GmbH, 94562 Oberpöring (DE)
(72) Erfinder: NIETO LARA, David, 88069 Tettnang (DE); IKONEN, Tommy, 88045 Friedrichshafen (DE); HIRTHAMMER, Daniel, 92421 Schwandorf (DE); LEEB, Theodor, 94522 Wallersdorf (DE)
(74) Vertreter: ZF Friedrichshafen AG
(86) Internationale Anmeldenummer: PCT/EP2020/052534
(87) Internationale Veröffentlichungsnummer: WO 2020/161035

(56) Entgegenhaltungen:
- EP-A1- 3 299 996
- WO-A1-2016/076320
- WO-A1-2018/135256
- DE-A1- 19 518 058
- DE-A1-102011 078 290
- DE-A1-102016 209 437
- DE-T2- 69 710 272
- US-A- 6 082 466

## Beschreibung

Die vorliegende Erfindung betrifft eine Vorrichtung zum sicheren Betreiben einer autonom betreibbaren landwirtschaftlichen Maschine. Die vorliegende Erfindung betrifft weiterhin ein Verfahren und ein System zum sicheren Betreiben einer autonom betreibbaren landwirtschaftlichen Maschine sowie eine autonom betreibbare landwirtschaftliche Maschine.

Immer mehr moderne landwirtschaftliche Maschinen (Bodenbearbeitungsmaschinen, Feldspritzen, Transporter, Sämaschinen, Zugmaschinen etc.) bieten Möglichkeiten für einen autonomen oder teilautonomen Betrieb. Gerade dadurch, dass Landmaschinen überwiegend auf Äckern bzw. außerhalb von verkehrsreichen Bereichen eingesetzt werden und die durchzuführenden Arbeiten oft wiederkehrend sind, können autonome Ansätze mit vergleichsweise geringem Aufwand implementiert werden. Insbesondere können selbstfahrende Fahrzeuge mit weitgehend oder vollständig autonom operierenden Werkzeugen eingesetzt werden. Es ergibt sich ein hohes Kostenreduktionspotential durch eine solche Automatisierung.

Eine wichtige Voraussetzung ist hierbei die Erfassung und Erkennung der Umgebung der landwirtschaftlichen Maschine. Mittels Umgebungssensoren, wie beispielsweise Radar-, Lidar-, Kamera- oder Ultraschallsensoren, werden Sensordaten mit Informationen zu der Umgebung erfasst. Basierend auf diesen Daten können Objekte in der Umgebung der landwirtschaftlichen Maschine identifiziert und klassifiziert werden. Ausgehend hiervon kann ein Verhalten der landwirtschaftlichen Maschine bezüglich des Fahrens und des Einsatzes eines Werkzeugs an eine aktuelle Situation angepasst werden.

In diesem Zusammenhang betrifft die DE 10 2016 209 437 A1 ein selbsttätiges Lenksystem zur Führung eines landwirtschaftlichen Fahrzeugs über ein Feld, auf dem bei einem vorhergehenden Arbeitsvorgang eine Fahrspur hinterlassen wurde. Das Lenksystem umfasst eine auf die Fahrspur blickende Kamera, ein Bildverarbeitungssystem zur Verarbeitung von Bildsignalen der Kamera und eine Lenksteuerung. Der Lenksteuerung ist ein vom Bildverarbeitungssystem erzeugtes Positionssignal hinsichtlich einer detektierten Position der Fahrspur zuführbar. Das Bildverarbeitungssystem ist programmiert, das Bildsignal der Kamera in ein binäres Bild zu überführen und die Fahrspur anhand einer auf das binäre Bild morphologischen Operation unter Verwendung eines die Fahrspur repräsentierenden Strukturelements zu erkennen.

DE 10 2011 078 290 A1 betrifft ein Verfahren und eine Vorrichtung zum Klassifizieren eines Umgebungsbereiches eines Fahrzeuges, wobei das Verfahren die folgenden Verfahrensschritte aufweist: Aufnehmen eines Abbildes des Umgebungsbereichs des Fahrzeuges mittels einer bildgebenden Sensoreinrichtung, Erkennen eines Musters auf dem aufgenommen Abbild des Umgebungsbereiches und Klassifizieren des Umgebungsbereiches des Fahrzeuges durch Vergleichen des erkannten Musters mit in einer Musterdatenbank abgespeicherten Mustern.

EP 3 299 996 A1 zeigt eine landwirtschaftliche Arbeitsmaschine mit einem ein Bildverarbeitungssystem, eine Regel- und Steuereinheit, eine Datenausgabeeinheit und zumindest ein Bildgenerierungssystem, wobei das Bildverarbeitungssystem eine Auswahl an den Umgebungsbildern in einer Bildanalyseeinheit verarbeitet. Das Bildgenerierungssystem ist dazu eingerichtet, Umgebungsbilder zu generieren und die Umgebungsbilder an das Bildverarbeitungssystem zu übergeben. Das Bildverarbeitungssystem ist ferner dazu eingerichtet, die übergebenen Umgebungsbilder zu verarbeiten, um Anomalien zuverlässig und schnell zu erfassen.

WO 2016/076320 A1 betrifft ein System zum Erfassen einer Feldhärte als Feldzustand. Hierzu ist eine Kamera an einem Arbeitsfahrzeug angebracht, das Arbeitsfahrzeug und die Feldszene werden mit der Kamera fotografiert und die Feldhärte wird durch ein Einsinken in das Feld gemessen.

WO 2018/135256 A1 zeigt ein elektronisches Steuersystem eines autonom fahrenden Arbeitsfahrzeugs, das eine Fahrzeugkarosserie autonom antreibt, um eine Kollision mit einem Hindernis zu vermeiden. Ein Hinderniserkennungsmodul erkennt, ob ein Hindernis vorhanden ist. Eine Kontaktvermeidungssteuereinheit führt eine Kontaktvermeidungssteuerung durch, um einen Kontakt mit dem Hindernis zu vermeiden. Das Hindernisdetektionsmodul umfasst eine Vielzahl von Hindernissonden. DE 697 10 272 T2 betrifft ein universales modulares Steuersystem für einen mobilen Materialverarbeitungsapparat. Die DE 697 10 272 T2 zeigt eine Vorrichtung zum sicheren Betreiben einer Maschine mit einer Eingangsschnittstelle zum Empfangen eines Sensorsignals eines Umgebungssensors, einer Verarbeitungseinheit zum Erkennen einer Fehlersituation basierend auf dem Sensorsignal, einer Klassifizierungseinheit zum Zuordnen der erkannten Fehlersituation zu einer Fehlerklasse und einer Sendeschnittstelle zum Übermitteln einer Nachricht an ein Steuergerät der Maschine, wobei die Nachricht die Fehlerklasse umfasst.

DE 195 18 058 A1 zeigt eine Vorrichtung und ein Verfahren zum Besprühen von Raumkulturen. Aus US 6 082 466 A sind eine Vorrichtung und ein Verfahren zum Bestimmen einer Position eines Anbauprodukts in einem Feld, das von einer mobilen Maschine durchquert wird, bekannt.

Eine Herausforderung besteht in der effizienten Verarbeitung der Sensordaten der Umgebungssensoren und Steuerung der Aktuatoren der landwirtschaftlichen Maschine. Dadurch, dass die Systemintegration im Bereich der landwirtschaftlichen Maschinen weniger weit fortgeschritten ist als im Bereich der PKWs oder LKWs, ist es oft erforderlich mehrere Systeme, die für verschiedene Funktionen benötigt werden, zu integrieren.

Ausgehend hiervon stellt sich der vorliegenden Erfindung die Aufgabe, einen Ansatz zum Betrieb einer autonom betreibbaren landwirtschaftlichen Maschine bereitzustellen. Insbesondere soll eine effiziente und zuverlässige Verarbeitung von Sensordaten und Ansteuerung von Aktuatoren erreicht werden. Die Sicherheit der landwirtschaftlichen Maschine sowie von Objekten in ihrer Umgebung soll gewährleistet werden. Zudem soll möglichst eine modulare Integrierbarkeit autonomer Funktionen in bestehende landwirtschaftliche Maschinen erreicht werden.

Zum Lösen dieser Aufgabe betrifft die vorliegende Erfindung in einem ersten Aspekt eine Vorrichtung zum sicheren Betreiben einer autonom betreibbaren landwirtschaftlichen Maschine, mit:
einer Eingangsschnittstelle zum Empfangen eines Sensorsignals eines Umgebungssensors an der landwirtschaftlichen Maschine mit Informationen über Objekte in der Umgebung der landwirtschaftlichen Maschine;
einer Verarbeitungseinheit zum Erkennen einer Fehlersituation basierend auf dem Sensorsignal;
einer Klassifizierungseinheit zum Zuordnen der erkannten Fehlersituation zu einer Fehlerklasse basierend auf einer vordefinierten Zuordnungsregel; und
einer Sendeschnittstelle zum periodischen Übermitteln einer Nachricht an ein Steuergerät der landwirtschaftlichen Maschine über ein Fahrzeugbussystem der landwirtschaftlichen Maschine, wobei die Nachricht die Fehlerklasse umfasst, wenn die Fehlersituation erkannt wurde, und keine Fehlerklasse umfasst, wenn keine Fehlersituation erkannt wurde, und wobei die Nachricht in regelmäßigen Zeitintervallen übermittelt wird.

In einem weiteren Aspekt betrifft die vorliegende Erfindung ein System zum sicheren Betreiben einer autonom betreibbaren landwirtschaftlichen Maschine, mit:
einer Vorrichtung wie zuvor beschrieben;
einem Umgebungssensor zum Erkennen von Objekten in der Umgebung der landwirtschaftlichen Maschine; und
einem Steuergerät zum Empfangen der Nachricht und zum Steuern einer Selbstfahreinheit und/oder eines Werkzeugs der landwirtschaftlichen Maschine basierend auf der empfangenen Nachricht.

In einem weiteren Aspekt betrifft die vorliegende Erfindung eine autonom betreibbare landwirtschaftliche Maschine, mit:
einem System wie zuvor beschrieben;
einem Fahrzeugbussystem; und
einer Selbstfahreinheit zum Bewegen der landwirtschaftlichen Maschine und/oder einem Werkzeug zum Ausführen einer landwirtschaftlichen Aufgabe, insbesondere einer Feldspritze zum Aussprühen einer Substanz.

Weitere Aspekte der Erfindung betreffen ein der Vorrichtung entsprechendes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Insbesondere können die Vorrichtung, das System, die landwirtschaftliche Maschine, das Verfahren und das Computerprogrammprodukt entsprechend der für die Vorrichtung und das System in den abhängigen Ansprüchen beschriebenen Ausgestaltungen ausgeführt sein.

Die erfindungsgemäße Vorrichtung beziehungsweise das erfindungsgemäße Verfahren und System dienen dazu, eine effiziente Kommunikation zwischen verschiedenen Einheiten innerhalb einer autonom betreibbaren landwirtschaftlichen Maschine sicherzustellen. Über eine Eingangsschnittstelle wird ein Sensorsignal eines Umgebungssensors empfangen. Basierend auf diesem Signal kann eine Fehlersituation erkannt werden. Diese Fehlersituation wird einer vordefinierten Fehlerklasse zugeordnet. In vordefinierten Zeitintervallen werden Nachrichten an ein Steuergerät der landwirtschaftlichen Maschine über ein Fahrzeugbussystem übermittelt. Das Fahrzeugbussystem des Fahrzeugs dient zum Verbinden mehrerer daran angeschlossener Einheiten. In den periodisch übermittelten Nachrichten befindet sich genau dann die Fehlerklasse der Fehlersituation, wenn die Fehlersituation erkannt wurde. Wenn keine Fehlersituation erkannt wurde, werden leere Nachrichten übermittelt.

Die erfindungsgemäße Vorrichtung übermittelt insoweit lediglich Informationen. Die Kommunikation zwischen der Vorrichtung und dem Steuergerät der landwirtschaftlichen Maschine ist im Wesentlichen unidirektional. Die Vorrichtung schickt an das zentrale Steuergerät Nachrichten. Die Nachrichten werden im Fahrzeugsteuergerät verarbeitet. Das Steuergerät dient dazu, eine Selbstfahreinheit und/oder ein Werkzeug der landwirtschaftlichen Maschine zu steuern. Erst im Fahrzeugsteuergerät werden also (basierend auf der ermittelten und übermittelten Fehlerklasse) einzelne Fahr- oder andere Funktionen der landwirtschaftlichen Maschine angesteuert. Insbesondere kann eine Ansteuerung von Fahrfunktionen und/oder von Werkzeugfunktionen erfolgen.

Dadurch, dass ein periodisches Übermitteln der Nachrichten vorgenommen wird, kann eine effiziente Kommunikation sichergestellt werden. Eine Überlastung des Fahrzeugbussystems in kritischen Situationen, in denen mehrere Einheiten gleichzeitig Nachrichten übermitteln wollen, kann vermieden werden. Es ist unmittelbar möglich festzustellen, ob ein Kommunikationsfehler vorliegt und keine Nachrichten mehr ankommen. In einer landwirtschaftlichen Maschine ohnehin vorhandene Kommunikationssysteme (insb. Fahrzeugbussystem) können verwendet werden, wodurch eine nachträgliche Installierbarkeit erreicht wird. Durch die Verwendung eines Fahrzeugbussystems wird eine effiziente Kommunikation zwischen mehreren Einheiten ermöglicht. Aufgrund der gleichzeitigen Verwendung eines Kommunikationskanals durch mehrere Systeme können Kommunikationsfehler weitestgehend verhindert werden.

Im Vergleich zu bisherigen Ansätzen, bei denen eine direkte Steuerung von Fahrzeug- und/oder Werkzeugfunktionen basierend auf den Sensordaten eines Umgebungssensors erfolgt, wird durch die erfindungsgemäße Klassifizierung und periodische Übermittlung eine vereinfachte Kommunikation mit geringerer Belastung des Kommunikationskanals erreicht. Zudem wird die Zuverlässigkeit verbessert. Im Vergleich zu bisherigen Ansätzen, bei denen eine unmittelbare Steuerung basierend auf dem Sensorsignal des Umgebungssensors erfolgt, wird die Kommunikation reduziert und ebenfalls die Zuverlässigkeit erhöht.

In einer bevorzugten Ausgestaltung ist die Eingangsschnittstelle zum Empfangen des Sensorsignals über das Fahrzeugbussystem ausgebildet. Ein oder mehrere Umgebungssensoren sind an das Fahrzeugbussystem angeschlossen und kommunizieren darüber mit der erfindungsgemäßen Vorrichtung. Eine flexible Konfiguration wird ermöglicht in Abhängigkeit von der landwirtschaftlichen Maschine und der spezifischen Anwendungsbedürfnisse.

In einer Ausgestaltung basiert die vordefinierte Zuordnungsregel auf einem aus der Fehlersituation resultierenden Risiko für die landwirtschaftliche Maschine und für Objekte in der Umgebung der landwirtschaftlichen Maschine. Ein höheres Risiko bedingt eine höhere Fehlerklasse. Die Fehlerklassen zeigen in anderen Worten ein Risiko für die landwirtschaftliche Maschine sowie für Objekte in ihrer Umgebung an. Es wird eine Verarbeitung vorgenommen, die das Ausführen einer vordefinierten Reaktion in Abhängigkeit des Risikos erlaubt. Eine einfache Datenverarbeitung wird ermöglicht.

In einer vorteilhaften Ausgestaltung ist die Sendeschnittstelle zum Übermitteln einer weiteren Nachricht vor Ablauf einer regulären Zeitperiode ausgebildet, wenn zwei Fehlersituationen erkannt werden. Es ist möglich, eine zweite Nachricht nach der ersten Nachricht zu übermitteln, bevor ein reguläres Zeitintervall zwischen der Übermittlung zweier Nachrichten abgelaufen ist. Hierdurch kann flexibel reagiert werden, wenn in schneller Abfolge mehrere Fehlersituationen detektiert werden. Die Sicherheit der landwirtschaftlichen Maschine sowie der Objekte in der Umgebung der Maschine werden verbessert. Erforderlichenfalls kann eine Flexibilität für eine Reaktion auf geänderte Umstände beziehungsweise auf weitere Fehler erreicht werden.

In einer Ausgestaltung ist die Eingangsschnittstelle zum Empfangen einer Statusnachricht des Steuergeräts der landwirtschaftlichen Maschine über das Fahrzeugbussystem ausgebildet. Es ist möglich, dass durch einen Rückkanal in einzelnen Fällen oder in allen Fällen eine Bestätigung durch das Steuergerät zurückübermittelt wird. Hierdurch kann eine bestätigte Kommunikation erfolgen und die Zuverlässigkeit beziehungsweise die Sicherheit weiter verbessert werden.

In einer Ausgestaltung ist die Verarbeitungseinheit zum Ermitteln eines Fehlerorts und/oder einer Fehlerart ausgebildet. Die Klassifizierungseinheit ist zum Zuordnen der erkannten Fehlersituation zu einer Fehlerklasse basierend auf dem ermittelten Fehlerort und/oder der ermittelten Fehlerart ausgebildet. Die Sendeschnittstelle ist zum periodischen Übermitteln der Nachricht mit dem ermittelten Fehlerort und/oder der ermittelten Fehlerklasse ausgebildet. Ein Fehlerort bezeichnet insbesondere eine Position des entsprechenden Umgebungssensors an der landwirtschaftlichen Maschine. Eine Fehlerart bezeichnet insbesondere eine Beschreibung bzw. Eingruppierung des Fehlers. Die Fehlerart kann beispielsweise basierend auf einer Zuordnung zu einer vordefinierten Gruppe festgelegt sein. Die Fehlerklasse ergibt sich dann ausgehend von Fehlerort und Fehlerart.

Die Sendeschnittstelle ist vorzugsweise zum periodischen Übermitteln der Nachricht mit dem ermittelten Fehlerort und/oder der ermittelten Fehlerklasse ausgebildet. Die Ermittlung eines Fehlerorts und/oder einer Fehlerart erlaubt eine einfache Zuordnung bzw. Klassifizierung eines Fehlers, die dann wiederum als Basis für das Ermitteln einer entsprechenden Reaktion der landwirtschaftlichen Maschine dienen kann.

In einer Ausgestaltung ist die Klassifizierungseinheit zum Ermitteln einer Reaktion der landwirtschaftlichen Maschine auf die erkannte Fehlersituation ausgebildet. Die Sendeschnittstelle ist zum periodischen Übermitteln der Nachricht mit der ermittelten Reaktion ausgebildet. Es ist optional möglich, dass in der erfindungsgemäßen Vorrichtung eine Reaktion der landwirtschaftlichen Maschine bestimmt bzw. vorgeschlagen wird. Diese Reaktion kann dann ebenfalls periodisch übermittelt werden. Hierdurch kann in einem modular aufgebauten autonomen Operationssystem einer landwirtschaftlichen Maschine ein Modul entsprechend der erfindungsgemäßen Vorrichtung integriert werden, das die Reaktion auf Fehlersituationen vollständig (aber ohne Ansteuerung der Aktuatoren der landwirtschaftlichen Maschine) abbildet. Es werden nicht nur Fehler erkannt, sondern zusätzlich adäquate Reaktionen der landwirtschaftlichen Maschine vorgeschlagen beziehungsweise festgelegt. Eine einfache nachträgliche Integrierbarkeit wird ermöglicht. Zudem wird eine effiziente Kommunikation sichergestellt, da nur notwendige Informationen übermittelt werden.

In einer bevorzugten Ausgestaltung des erfindungsgemäßen Systems ist das Steuergerät zum Vorgeben eines Betriebszustands der landwirtschaftlichen Maschine ausgebildet. Weiterhin ist das Steuergerät zum Wechseln von einem autonomen Betriebszustand, in dem die landwirtschaftliche Maschine autonom operiert, in einen ferngesteuerten Betriebszustand, in dem die landwirtschaftliche Maschine fernsteuerbar ist, ausgebildet, wenn die Fehlerklasse eine vordefinierte Zustandsbedingung erfüllt. Durch ein Vorgeben eines Betriebszustands kann die Sicherheit der landwirtschaftlichen Maschine und von Objekten in ihrer Umgebung erhöht werden. Dadurch, dass von einem autonomen Betriebszustand in einen ferngesteuerten Betriebszustand gewechselt wird, wird die Reaktion auf eine Fehlersituation einem menschlichen Bediener übertragen. Es erfolgt sozusagen eine Umschaltung auf manuellen Betrieb, wenn eine vordefinierte Zustandsbedingung erfüllt ist. Beispielsweise kann diese vordefinierte Zustandsbedingung ausgehend von dem aus der Fehlersituation resultierenden Risiko definiert sein. In Fehlersituationen, die ein hohes Risiko bedingen, muss eine Fernsteuerung durch einen menschlichen Bediener erfolgen.

In einer weiteren vorteilhaften Ausgestaltung des Systems ist das Steuergerät zum Abbremsen der landwirtschaftlichen Maschine ausgebildet, wenn die Fehlerklasse eine vordefinierte Bremsbedingung erfüllt. Vorzugsweise ist das Steuergerät zum Ermitteln einer Bremskraft basierend auf der Fehlerklasse und zum Abbremsen der landwirtschaftlichen Maschine mit der ermittelten Bremskraft ausgebildet. Auch die vordefinierte Bremsbedingung kann basierend auf dem Risiko, das sich aus der Fehlersituation für die landwirtschaftliche Maschine sowie für Objekte in ihrer Umgebung ergibt, definiert sein. Das Abbremsen kann insbesondere bis zum Stillstand der landwirtschaftlichen Maschine erfolgen. Eine stillstehende Maschine stellt zumeist keine oder nur eine geringe Gefahr für ihr Umfeld dar. Je nach Gefahr kann eine schwache oder starke Bremsung oder eine Notbremsung ausgelöst werden und die Bremskraft entsprechend ermittelt werden. Durch eine Notbremsung kann es zu Schäden an der landwirtschaftlichen Maschine kommen. Dennoch gibt es Fälle, in denen eine Notbremsung erforderlich ist, da beispielsweise Personenschaden droht. Es ist möglich, dass die Bremskraft ausgehend von der Fehlerklasse bestimmt wird.

In einer weiteren vorteilhaften Ausgestaltung umfasst das System eine Bedienerschnittstelle zum Empfangen einer Eingabe von einem Bediener. Das Steuergerät ist dabei zum Anfordern eines Bedienerbefehls über die Bedienerschnittstelle ausgebildet, wenn die Fehlerklasse eine vordefinierte Eingabebedingung erfüllt. Es ist ebenfalls möglich, dass ein menschlicher Bediener aufgefordert wird, eine Eingabe vorzunehmen, wenn eine bestimmte Bedingung erfüllt ist. Insbesondere kann dem Bediener für bestimmte Fehlerklassen eine Handlungsanweisung übermittelt werden. Der Bediener wird aufgefordert, über einen Bedienerbefehl anzuzeigen, dass er die Handlungsanweisung ausgeführt hat. Durch die Verwendung einer Bedienerschnittstelle kann ein Bediener eingebunden werden. Eine Fehlerbehandlung, die einen Bediener erfordert, kann vorgenommen werden. Hierdurch wird die Sicherheit beim Betrieb der autonom betreibbaren landwirtschaftlichen Maschine weiter verbessert.

In einer vorteilhaften Ausgestaltung des Systems ist das Steuergerät zum Ausführen der Reaktion ausgebildet. Die Reaktion wird dabei von der Vorrichtung vorgeschlagen und übermittelt. Wenn eine Reaktion übermittelt wird, kann das Steuergerät eine entsprechende Steuerung von Einheiten der landwirtschaftlichen Maschine (Aktuatoren) vornehmen, sodass die Reaktion der landwirtschaftlichen Maschine ausgeführt wird. Es ergibt sich eine modulare und ggf. nachträgliche Installierbarkeit.

Eine autonom betreibbare landwirtschaftliche Maschine bezeichnet hierin insbesondere eine Maschine, die ohne Eingriff eines menschlichen Bedieners fahren und eine landwirtschaftliche Funktion/Aufgabe ausführen kann. Beispielsweise eine selbstfahrende Feldspritze, die ein Spritzmittel oder eine andere Substanz ausbringt, oder eine selbstfahrende Sämaschine, die Saatgut ausbringt. Die landwirtschaftliche Maschine verfügt insbesondere über eine Selbstfahreinheit, die eine Bewegung der Maschine ohne Steuerungseingriff eines Bedieners ermöglicht, und ein Werkzeug, das ohne Steuerungseingriff eines Bedieners eine landwirtschaftliche Funktion ausführt (Aktuatoren der landwirtschaftlichen Maschine).

Ein Betriebszustand ist insbesondere ein Zustand der landwirtschaftlichen Maschine beziehungsweise ein Zustand des Kontrollsystems der landwirtschaftlichen Maschine. Das Kontrollsystem umfasst alle verschiedenen Steuer- und Regelungseinheiten der Maschine. Ein Betriebszustand kann sich insbesondere dadurch vorgeben beziehungsweise einstellen lassen, dass entsprechenden Sensoren und Aktuatoren der landwirtschaftlichen Maschine Steuersignale übermittelt werden. Die Sensoren und Aktuatoren führen dann eine Funktion aus oder unterbinden eine Funktion. Eine Umgebung der landwirtschaftlichen Maschine umfasst insbesondere einen von einem an der landwirtschaftlichen Maschine angebrachten Umgebungssensor aus sichtbaren Bereich im Umfeld der landwirtschaftlichen Maschine. Ein Umgebungssensor kann auch mehrere Sensoren umfassen, die beispielsweise eine 360°-Rundumsicht ermöglichen und somit ein vollständiges Umgebungsbild aufzeichnen können. Ein Objekt kann hierin ein statisches oder ein dynamisches Objekt sein. Beispielsweise stellen Bäume, Steine, Fußgänger, Personen, Tiere und andere Maschinen Objekte dar. Eine Fehlersituation kann sowohl durch einen Fehler am Sensor begründet sein als auch ein basierend auf dem Sensorsignal erkanntes potentielles oder tatsächliches Problem bezeichnen. Ein Fahrzeugbussystem kann insbesondere ein CAN-Bus sein. Eine Fehlersituation kann insbesondere eine Fehlerart und einen Fehlerort umfassen. Die vordefinierte Zuordnungsregel kann auf einer Look-Up Tabelle basieren, in der einer Fehlersituation eine Klasse zugeordnet wird.

Die Erfindung wird nachfolgend anhand einiger ausgewählter Ausführungsbeispiele im Zusammenhang mit den beiliegenden Zeichnungen näher beschrieben und erläutert. Es zeigen:
Fig. 1 eine schematische Darstellung einer landwirtschaftlichen Maschine mit einem erfindungsgemäßen System;
Fig. 2 eine schematische Darstellung einer erfindungsgemäßen Vorrichtung;
Fig. 3 eine schematische Darstellung einer weiteren Ausführungsform einer erfindungsgemäßen landwirtschaftlichen Maschine; und
Fig. 4 eine schematische Darstellung eines erfindungsgemäßen Verfahrens.

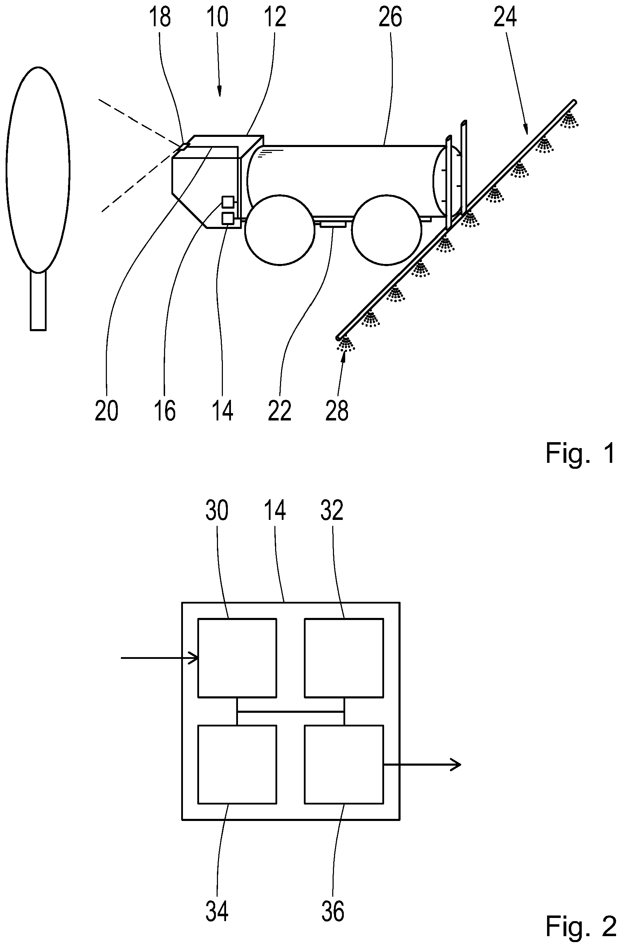

Fig. 1 zeigt schematisch ein erfindungsgemäßes System 10 zum sicheren Betreiben einer autonom betreibbaren landwirtschaftlichen Maschine 12. Das System 10 umfasst eine Vorrichtung 14 sowie ein Steuergerät 16 und einen Umgebungssensor 18. Die landwirtschaftliche Maschine 12 umfasst zudem ein Fahrzeugbussystem 20, das eine Kommunikationsverbindung zwischen den verschiedenen Einheiten, insbesondere zwischen der Vorrichtung 14, dem Steuergerät 16 und dem Umgebungssensor 18 herstellt. Weiterhin umfasst die autonom betreibbare landwirtschaftliche Maschine eine Selbstfahreinheit 22 sowie ein Werkzeug 24.

Im dargestellten Beispiel ist eine autonom fahrende Feldspritze als landwirtschaftliche Maschine 12 abgebildet. Die Feldspritze dient dazu, auf größeren Äckern oder Feldern sprühend eine flüssige Substanz auszubringen. Hierzu umfasst die Feldspritze einen Flüssigkeitstank 26, in den beispielsweise ein Pflanzenschutzmittel eingefüllt werden kann. Weiterhin umfasst die Feldspritze eine Spritzvorrichtung als Werkzeug 24. Mittels der Spritzvorrichtung kann der Inhalt des Flüssigkeitstanks 26 auf ein Feld beziehungsweise auf die Pflanzen auf dem Feld ausgebracht werden. Im dargestellten Beispiel ist die Spritzvorrichtung als langer und ausklappbarer Ausleger ausgebildet, der es ermöglicht, über eine Breite von mehreren Metern mittels mehrerer Düsen 28 und einer (nicht dargestellten) Pumpe die Flüssigkeit des Flüssigkeitstanks 26 auszubringen.

Die landwirtschaftliche Maschine operiert autonom, also ohne Bediener. Durch die Selbstfahreinheit 22 erfolgt eine autonome Bewegung. Durch das Werkzeug 24 eine autonome Feldbearbeitung. Bei autonomem Betrieb auftretende Fehlersituationen müssen behandelt. Insbesondere ist es erforderlich, dass die landwirtschaftliche Maschine eine adäquate Reaktion ausübt und dabei die Sicherheit der Maschine und der Objekte in ihrer Umgebung sichergestellt wird. Fehlersituationen können dabei beispielsweise verstaubte oder verdreckte Sensoren, erkannte Hindernisse, defekte Sensoren oder auch defekte Aktuatoren sein. Reaktionen der landwirtschaftlichen Maschine können beispielsweise eine Notbremsung, eine langsame Bremsung bis zum Stillstand, ein leichtes Bremsen im Sinne eines Verzögerns, ein starkes Abbremsen oder auch ein Ausweichen sein. Die Reaktion der autonomen Maschine muss der Detektion beziehungsweise der Fehlersituation angemessen sein, um einen sicheren Betrieb der landwirtschaftlichen Maschine zu gewährleisten. Im Bereich der landwirtschaftlichen Maschinen ist es weiterhin relevant, dass oft eine nachträgliche Installation beziehungsweise eine modulare Integration unterschiedlicher Einheiten vorgenommen werden kann.

In der Vorrichtung 14 wird ein Sensorsignal des Umgebungssensors 18 verarbeitet. Basierend auf dem Sensorsignal wird eine Fehlersituation erkannt. Diese Fehlersituation wird einer Fehlerklasse zugeordnet, die dann an das Steuergerät 16 kommuniziert wird. Das Steuergerät kann sowohl das Werkzeug 24 als auch die Selbstfahreinheit 22 ansteuern und eine adäquate Reaktion der landwirtschaftlichen Maschine 12 auf die Fehlersituation einleiten. Insoweit erfolgt die Ansteuerung der Selbstfahrfunktionen sowie der Funktionen des Werkzeugs 24 nicht durch die Vorrichtung 14 selbst, sondern durch das Steuergerät 16. Durch die Trennung der Funktionalität des Erkennens und Klassifizierens der Fehlersituation von der Ansteuerung der Fahrzeugfunktionen ergibt sich eine vereinfachte nachträgliche Installierbarkeit.

In der Fig. 2 ist schematisch eine erfindungsgemäße Vorrichtung 14 dargestellt. Die Vorrichtung 14 umfasst eine Eingangsschnittstelle 30, eine Verarbeitungseinheit 32, eine Klassifizierungseinheit 34 sowie eine Sendeschnittstelle 36. Die Vorrichtung 14 kann beispielsweise als Zusatzmodul in das Fahrzeugsteuergerät 16 der landwirtschaftlichen Maschine 12 integriert sein oder auch als physisch separates Modul implementiert sein. Es ist möglich, dass die erfindungsgemäße Vorrichtung 14 teilweise oder vollständig in Soft- und/oder Hardware umgesetzt ist. Die Einheiten und Schnittstellen können einzeln oder kombiniert als Prozessor, Prozessormodul oder Software für einen Prozessor ausgebildet sein.

Über die Eingangsschnittstelle 30 werden Sensorsignale eines Umgebungssensors oder auch mehrerer Umgebungssensoren empfangen. Insbesondere können Daten eines Radar-, Lidar-, Ultraschall- oder Kamerasensors empfangen werden. Die empfangenen Sensorsignale umfassen Informationen über Objekte in der Umgebung der landwirtschaftlichen Maschine. Insbesondere umfassen die Detektionen eines Umgebungssensors Informationen über eine räumliche Position eines detektierten Objekts.

In der Verarbeitungseinheit 32 wird basierend auf dem empfangenen Sensorsignal eine Fehlersituation erkannt. Insbesondere ist es möglich, dass ein Fehlercode zugeordnet wird. Der Fehlercode kann sich beispielsweise aus einem Fehlerort (0-9999) und einer Fehlerart (0-999) zusammensetzen. Ein Fehlerort kann insoweit beispielsweise eine vordere linke Kamera der landwirtschaftlichen Maschine identifizieren. Eine Fehlerart kann beispielsweise eine Verschmutzung dieser Kamera sein. Für die Erkennung der Fehlersituation können beispielsweise künstliche neuronale Netze oder andere lernende Algorithmen eingesetzt werden.

In der Klassifizierungseinheit 34 erfolgt dann eine Zuordnung der erkannten Fehlersituation zu einer Fehlerklasse. Hierzu wird eine vordefinierte Zuordnungsregel verwendet. Insbesondere kann spezifiziert sein, welche Fehlerklasse aus einem bestimmten Fehlercode resultiert. Beispielsweise kann je nach Schwere des Fehlers beziehungsweise je nach Größe des aus der Fehlersituation hervorgehenden Risikos eine unterschiedliche Reaktion des Fahrantriebs erfolgen. Auch für die Klassifizierung können beispielsweise künstliche neuronale Netze oder andere lernende Algorithmen eingesetzt werden.

Über die Sendeschnittstelle 36 wird die Fehlerklasse an das Steuergerät der landwirtschaftlichen Maschine übermittelt. Wie die Eingangsschnittstelle kann auch die Sendeschnittstelle in Soft- und/oder in Hardware implementiert sein. Die Kommunikation erfolgt vorzugsweise unidirektional. Die Sendeschnittstelle 36 ist dabei dazu ausgebildet, Nachrichten periodisch, also in regelmäßigen Zeitintervallen, zu übermitteln. Wenn keine Fehlersituation erkannt wird, beinhaltet die übermittelte Nachricht keine Fehlerklasse.

Es ist möglich, dass das Steuergerät eine Statusnachricht an die Sendeschnittstelle 36 zurückübermittelt. Beispielsweise kann vom Steuergerät in einer Statusnachricht zurückübermittelt werden, dass ein autonomer Betriebszustand oder zumindest ein vorautonomer Betriebszustand zum aktuellen Zeitpunkt möglich ist. Wenn eine Statusnachricht empfangen wird, die anzeigt, dass sich die landwirtschaftliche Maschine im Moment nicht im autonomen Betriebszustand befindet, kann auf die Übermittlung von Nachrichten bzw. auf die Behandlung von Fehlersituationen verzichtet werden.

Ebenfalls ist es möglich, dass mehrere Nachrichten sequentiell hintereinander geschickt werden innerhalb eines Sendezyklus, wenn gleichzeitig oder in kurzem Zeitabstand mehrere Fehlersituationen erkannt werden.

Die Eingangsschnittstelle 30 und/oder die Sendeschnittstelle 36 können beispielsweise als Steckverbindung in Hardware umgesetzt sein. Es ist auch möglich, dass die Eingangsschnittstelle 30 und/oder die Sendeschnittstelle 36 als entsprechende Softwareschnittstellen zum Datenempfang ausgebildet sind. Die Schnittstellen können insbesondere zur Kommunikation über einen CAN-Bus (Fahrzeugbussystem) ausgebildet sein. Insbesondere kann die übermittelte Nachricht einer CAN-Botschaft beziehungsweise einer Fehler- und Diagnosenachricht entsprechen.

Im Folgenden wird eine beispielhafte Klassifizierung beschrieben: In eine Klasse 0 wird eine Fehlersituation eingestuft, wenn der entsprechende Fehler für das autonome Fahren nicht relevant ist. Der Fehler wird dann nur im Fehlerspeicher dokumentiert. Als Reaktion wird ein Weiterfahren der landwirtschaftlichen Maschine ausgelöst. Wenn beispielsweise als Fehlersituation eine verstaubte Kamera erkannt wird, die die Weiterfahrt nicht beeinträchtigt, wird lediglich eine Warnung ausgegeben, sodass ein Bediener bei nächster Gelegenheit die Kamera reinigen kann.

In eine Klasse 1 wird eine Fehlersituation eingestuft, wenn das autonome Fahren beeinträchtigt wird. Als Reaktion wechselt der Fahrantrieb dann (durch entsprechende Ansteuerung der Selbstfahreinheit) in einen ferngesteuerten Betrieb und die landwirtschaftliche Maschine bleibt langsam stehen. Wenn beispielsweise ein Kamerasensor defekt ist und dies die Weiterfahrt beeinträchtigt, bleibt die landwirtschaftliche Maschine stehen.

In eine Klasse 2 wird eine Fehlersituation eingestuft, wenn der autonome Betrieb schwerer beeinträchtigt wird. Der Fahrantrieb wechselt als Reaktion dann in einen ferngesteuerten Betrieb und es wird ein starker Abbremsvorgang ausgelöst. Wenn beispielsweise ein Hindernis in einer Entfernung von 20 m erkannt wird, führt dies zu einem starken Abbremsen.

In eine Klasse 3 wird eine Fehlersituation eingestuft, wenn eine Gefahr für die landwirtschaftliche Maschine oder für ein Objekt in der Umgebung erkannt wird. Der Fahrantrieb wechselt als Reaktion dann in einen ferngesteuerten Betrieb und führt eine Notbremsung durch. Wenn beispielsweise ein Hindernis direkt vor der landwirtschaftlichen Maschine erkannt wird, löst dies eine Notbremsung aus.

In dieser beispielhaften Klassifizierung wird in den Klassen 1 bis 3 jeweils automatisch ein Wechsel eines Betriebszustands der landwirtschaftlichen Maschine ausgelöst. Insbesondere wird der autonome Betriebszustand verlassen. In der Klasse 0 verbleibt die landwirtschaftliche Maschine im autonomen Betriebszustand. Vorzugsweise wird bei jeder Fehlersituation unabhängig von der Klassifizierung ein Bediener der landwirtschaftlichen Maschine informiert, beispielsweise über ein Telemetriesystem.

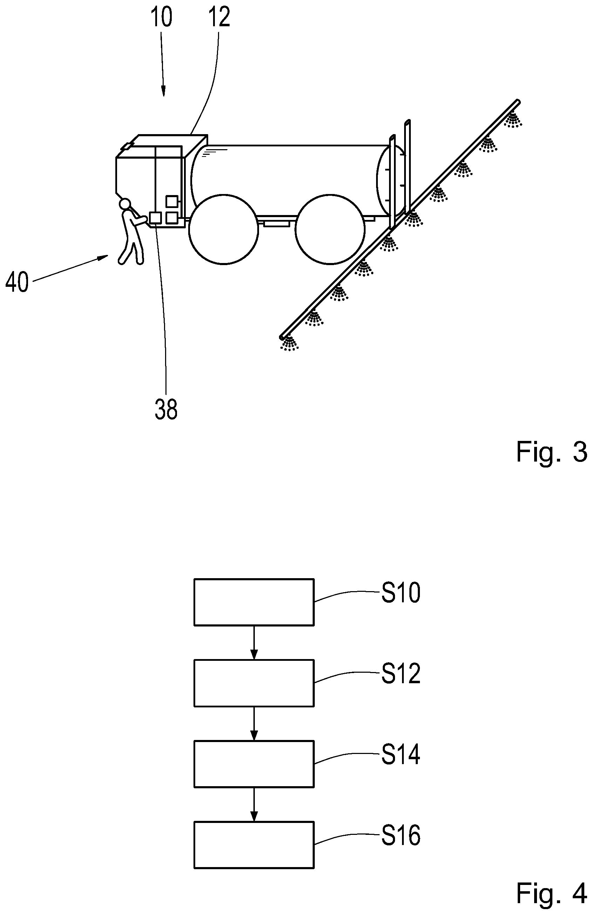

In der Fig. 3 ist schematisch eine optionale Weiterbildung der landwirtschaftlichen Maschine 12 mit dem erfindungsgemäßen System 10 dargestellt. Die landwirtschaftliche Maschine umfasst zusätzlich eine Bedienerschnittstelle 38, die eine Interaktion mit einem (menschlichen) Bediener 40 ermöglicht. Beispielsweise kann ein Knopf, ein Touchscreen-Display oder ein Hebel vorgesehen sein. Über die Bedienerschnittstelle 38 kann eine Eingabe eines Bedieners angefordert werden. Beispielsweise kann es im Falle eines verschmutzten Sensors notwendig sein, vom Bediener 40 eine Bestätigung anzufordern, dass dieser die Verschmutzung beseitigt hat. Diese Anforderung kann Teil der Reaktion der landwirtschaftlichen Maschine auf eine erkannte Fehlersituation sein.

In der Fig. 4 ist schematisch ein erfindungsgemäßes Verfahren zum sicheren Betreiben einer autonom betreibbaren landwirtschaftlichen Maschine dargestellt. Das Verfahren umfasst Schritte des Empfangens S10 eines Sensorsignals, des Erkennens S12 einer Fehlersituation, des Zuordnens S14 der erkannten Fehlersituation zu einer Fehlerklasse und des periodischen Übermittelns S18 einer Nachricht an ein Steuergerät. Das Verfahren kann beispielsweise als Software implementiert sein, die auf einem Fahrzeugsteuergerät der landwirtschaftlichen Maschine ausgeführt wird. Ebenfalls ist es möglich, dass das erfindungsgemäße Verfahren als Software für ein Mobilgerät (Smartphone-App) implementiert ist. Das Verfahren kann vollständig oder teilweise Cloud-basiert ausgeführt sein.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Schnittstelle, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

### Bezugszeichen

- 10: System
- 12: landwirtschaftliche Maschine
- 14: Vorrichtung
- 16: Steuergerät
- 18: Umgebungssensor
- 20: Fahrzeugbussystem
- 22: Selbstfahreinheit
- 24: Werkzeug
- 26: Flüssigkeitstank
- 28: Düse
- 30: Eingangsschnittstelle
- 32: Verarbeitungseinheit
- 34: Klassifizierungseinheit
- 36: Sendeschnittstelle
- 38: Bedienerschnittstelle
- 40: Bediener

## Patentansprüche

1. Vorrichtung (14) zum sicheren Betreiben einer autonom betreibbaren landwirtschaftlichen Maschine (12), mit:
- einer Eingangsschnittstelle (30) zum Empfangen eines Sensorsignals eines Umgebungssensors (18) an der landwirtschaftlichen Maschine mit Informationen über Objekte in der Umgebung der landwirtschaftlichen Maschine;
- einer Verarbeitungseinheit (32) zum Erkennen einer Fehlersituation basierend auf dem Sensorsignal;
- einer Klassifizierungseinheit (34) zum Zuordnen der erkannten Fehlersituation zu einer Fehlerklasse basierend auf einer vordefinierten Zuordnungsregel; und
- einer Sendeschnittstelle (36) zum periodischen Übermitteln einer Nachricht an ein Steuergerät (16) der landwirtschaftlichen Maschine über ein Fahrzeugbussystem (20) der landwirtschaftlichen Maschine, wobei die Nachricht die Fehlerklasse umfasst, wenn die Fehlersituation erkannt wurde, und keine Fehlerklasse umfasst, wenn keine Fehlersituation erkannt wurde, und wobei die Sendeschnittstelle dazu ausgebildet ist dass die Nachricht in regelmäßigen Zeitintervallen übermittelt wird.

2. Vorrichtung (14) nach Anspruch 1, wobei die Eingangsschnittstelle (30) zum Empfangen des Sensorsignals über das Fahrzeugbussystem (20) ausgebildet ist.

3. Vorrichtung (14) nach einem der vorstehenden Ansprüche, wobei
- die vordefinierte Zuordnungsregel auf einem aus der Fehlersituation resultierenden Risiko für die landwirtschaftliche Maschine (12) und für Objekte in der Umgebung der landwirtschaftlichen Maschine basiert; und
- ein höheres Risiko eine höhere Fehlerklasse bedingt.

4. Vorrichtung (14) nach einem der vorstehenden Ansprüche, wobei die Sendeschnittstelle (36) zum Übermitteln einer weiteren Nachricht vor Ablauf einer regulären Zeitperiode ausgebildet ist, wenn zwei Fehlersituationen erkannt werden.

5. Vorrichtung (14) nach einem der vorstehenden Ansprüche, wobei die Eingangsschnittstelle (30) zum Empfangen einer Statusnachricht des Steuergeräts (16) der landwirtschaftlichen Maschine (12) über das Fahrzeugbussystem (20) ausgebildet ist.

6. Vorrichtung (14) nach einem der vorstehenden Ansprüche, wobei
- die Verarbeitungseinheit (32) zum Ermitteln eines Fehlerorts und/oder einer Fehlerart ausgebildet ist;
- die Klassifizierungseinheit (34) zum Zuordnen der erkannten Fehlersituation zu einer Fehlerklasse basierend auf dem ermittelten Fehlerort und/oder der ermittelten Fehlerart ausgebildet ist; und
- die Sendeschnittstelle (36) vorzugsweise zum periodischen Übermitteln der Nachricht mit dem ermittelten Fehlerort und/oder der ermittelten Fehlerklasse ausgebildet ist.

7. Vorrichtung (14) nach einem der vorstehenden Ansprüche, wobei
- die Klassifizierungseinheit (34) zum Ermitteln einer Reaktion der landwirtschaftlichen Maschine (12) auf die erkannte Fehlersituation ausgebildet ist; und
- die Sendeschnittstelle (36) zum periodischen Übermitteln der Nachricht mit der ermittelten Reaktion ausgebildet ist.

8. System (10) zum sicheren Betreiben einer autonom betreibbaren landwirtschaftlichen Maschine (12), mit:
- einer Vorrichtung (14) nach einem der Ansprüche 1 bis 7;
- einem Umgebungssensor (18) zum Erkennen von Objekten in der Umgebung der landwirtschaftlichen Maschine; und
- einem Steuergerät (16) zum Empfangen der Nachricht und zum Steuern einer Selbstfahreinheit (22) und/oder eines Werkzeugs (24) der landwirtschaftlichen Maschine basierend auf der empfangenen Nachricht.

9. System (10) nach Anspruch 8, wobei
- das Steuergerät (16) zum Vorgeben eines Betriebszustands der landwirtschaftlichen Maschine (12) ausgebildet ist;
- das Steuergerät zum Wechseln von einem autonomen Betriebszustand, in dem die landwirtschaftliche Maschine autonom operiert, in einen ferngesteuerten Betriebszustand, in dem die landwirtschaftliche Maschine fernsteuerbar ist, ausgebildet ist, wenn die Fehlerklasse eine vordefinierte Zustandsbedingung erfüllt.

10. System (10) nach einem der Ansprüche 8 bis 9, wobei
- das Steuergerät (16) zum Abbremsen der landwirtschaftlichen Maschine (12) ausgebildet ist, wenn die Fehlerklasse eine vordefinierte Bremsbedingung erfüllt; und
- das Steuergerät vorzugsweise zum Ermitteln einer Bremskraft basierend auf der Fehlerklasse und zum Abbremsen der landwirtschaftlichen Maschine mit der ermittelten Bremskraft ausgebildet ist.

11. System (10) nach einem der Ansprüche 8 bis 10, mit einer Bedienerschnittstelle zum Empfangen einer Eingabe von einem Bediener, wobei
- das Steuergerät (16) zum Anfordern eines Bedienerbefehls über die Bedienerschnittstelle ausgebildet ist, wenn die Fehlerklasse eine vordefinierte Eingabebedingung erfüllt.

12. System (10) nach einem der Ansprüche 8 bis 11, mit einer Vorrichtung (14) nach Anspruch 7, wobei das Steuergerät (16) zum Ausführen der Reaktion ausgebildet ist.

13. Autonom betreibbare landwirtschaftliche Maschine (12), mit:
- einem System (10) nach einem der Ansprüche 8 bis 12;
- einem Fahrzeugbussystem (20); und
- einer Selbstfahreinheit (22) zum Bewegen der landwirtschaftlichen Maschine und/oder einem Werkzeug (24) zum Ausführen einer landwirtschaftlichen Aufgabe, insbesondere einer Feldspritze zum Aussprühen einer Substanz.

14. Verfahren zum sicheren Betreiben einer autonom betreibbaren landwirtschaftlichen Maschine (12), wobei die landwirtschaftliche Maschine (12) nach Anspruch 13 ausgeformt ist, mit den Schritten:
- Empfangen (S10) eines Sensorsignals eines Umgebungssensors (18) an der landwirtschaftlichen Maschine mit Informationen über Objekte in der Umgebung der landwirtschaftlichen Maschine;
- Erkennen (S12) einer Fehlersituation basierend auf dem Sensorsignal;
- Zuordnen (S14) der erkannten Fehlersituation zu einer Fehlerklasse basierend auf einer vordefinierten Zuordnungsregel; und
- periodisches Übermitteln (S16) einer Nachricht an ein Steuergerät (16) der landwirtschaftlichen Maschine über ein Fahrzeugbussystem (20) der landwirtschaftlichen Maschine, wobei die Nachricht die Fehlerklasse umfasst, wenn die Fehlersituation erkannt wurde, und keine Fehlerklasse umfasst, wenn keine Fehlersituation erkannt wurde, und wobei die Nachricht in regelmäßigen Zeitintervallen übermittelt wird.

15. Computerprogrammprodukt mit Programmcode zum Durchführen der Schritte des Verfahrens nach Anspruch 14, wenn der Programmcode auf einem Computer einer autonom betreibbaren landwirtschaftlichen Maschine nach Anspruch 13 ausgeführt wird.

## Claims

1. Device (14) for safely operating an autonomously operable agricultural machine (12), having:
- an input interface (30) for receiving a sensor signal from an environmental sensor (18) on the agricultural machine containing information relating to objects in the environment of the agricultural machine;
- a processing unit (32) for identifying a fault situation on the basis of the sensor signal;
- a classification unit (34) for assigning the identified fault situation to a fault class on the basis of a predefined assignment rule; and
- a transmitting interface (36) for periodically transmitting a message to a control unit (16) of the agricultural machine via a vehicle bus system (20) of the agricultural machine, wherein the message comprises the fault class if the fault situation was identified, and does not comprise a fault class if no fault situation was identified, and wherein the transmitting interface is designed to transmit the message at regular intervals of time.

2. Device (14) according to Claim 1, wherein the input interface (30) is designed to receive the sensor signal via the vehicle bus system (20).

3. Device (14) according to one of the preceding claims, wherein
- the predefined assignment rule is based on a risk to the agricultural machine (12) and to objects in the environment of the agricultural machine resulting from the fault situation; and
- a higher risk gives rise to a higher fault class.

4. Device (14) according to one of the preceding claims, wherein the transmitting interface (36) is designed to transmit a further message before the expiry of a regular period of time if two fault situations are identified.

5. Device (14) according to one of the preceding claims, wherein the input interface (30) is designed to receive a status message from the control unit (16) of the agricultural machine (12) via the vehicle bus system (20) .

6. Device (14) according to one of the preceding claims, wherein
- the processing unit (32) is designed to determine a fault location and/or a fault type;
- the classification unit (34) is designed to assign the identified fault situation to a fault class on the basis of the determined fault location and/or the determined fault type; and
- the transmitting interface (36) is preferably designed to periodically transmit the message containing the determined fault location and/or the determined fault class.

7. Device (14) according to one of the preceding claims, wherein
- the classification unit (34) is designed to determine a reaction of the agricultural machine (12) to the identified fault situation; and
- the transmitting interface (36) is designed to periodically transmit the message with the determined reaction.

8. System (10) for safely operating an autonomously operable agricultural machine (12), having:
- a device (14) according to one of Claims 1 to 7;
- an environmental sensor (18) for detecting objects in the environment of the agricultural machine; and
- a control unit (16) for receiving the message and for controlling a self-propelled unit (22) and/or a tool (24) of the agricultural machine on the basis of the received message.

9. System (10) according to Claim 8, wherein
- the control unit (16) is designed to specify an operating state of the agricultural machine (12);
- the control unit is designed to change from an autonomous operating state, in which the agricultural machine operates autonomously, into a remote-controlled operating state, in which the agricultural machine can be remotely controlled, if the fault class satisfies a predefined state condition.

10. System (10) according to one of Claims 8 to 9, wherein
- the control unit (16) is designed to decelerate the agricultural machine (12) if the fault class satisfies a predefined braking condition; and
- the control unit is preferably designed to determine a braking force on the basis of the fault class and to decelerate the agricultural machine with the determined braking force.

11. System (10) according to one of Claims 8 to 10, having an operator interface for receiving an input from an operator, wherein
- the control unit (16) is designed to request an operator command via the operator interface if the fault class satisfies a predefined input condition.

12. System (10) according to one of Claims 8 to 11, having a device (14) according to Claim 7, wherein the control unit (16) is designed to perform the reaction.

13. Autonomously operable agricultural machine (12), having:
- a system (10) according to one of Claims 8 to 12;
- a vehicle bus system (20); and
- a self-propelled unit (22) for moving the agricultural machine and/or a tool (24) for performing an agricultural task, in particular a field sprayer for spraying a substance.

14. Method for safely operating an autonomously operable agricultural machine (12), wherein the agricultural machine (12) is formed according to Claim 13, having the steps of:
- receiving (S10) a sensor signal from an environmental sensor (18) on the agricultural machine containing information relating to objects in the environment of the agricultural machine;
- identifying (S12) a fault situation on the basis of the sensor signal;
- assigning (S14) the identified fault situation to a fault class on the basis of a predefined assignment rule; and
- periodically transmitting (S16) a message to a control unit (16) of the agricultural machine via a vehicle bus system (20) of the agricultural machine, wherein the message comprises the fault class if the fault situation was identified and does not comprise a fault class if no fault situation was identified, and wherein the message is transmitted at regular intervals of time.

15. Computer program product having program code for carrying out the steps of the method according to Claim 14 when the program code is executed on a computer of an autonomously operable agricultural machine according to Claim 13.

## Revendications

1. Dispositif (14) pour faire fonctionner en toute sécurité une machine agricole (12) pouvant fonctionner de manière autonome, comprenant :
- une interface d'entrée (30) destinée à recevoir un signal de capteur d'un capteur d'environnement (18) au niveau de la machine agricole, avec des informations à propos d'objets dans l'environnement de la machine agricole ;
- une unité de traitement (32) destinée à reconnaître une situation de défaut en se basant sur le signal de capteur ;
- une unité de classification (34) destinée à affecter la situation de défaut identifiée à une classe de défaut en se basant sur une règle d'affectation prédéfinie ; et
- une interface d'émission (36) destinée à communiquer périodiquement un message à un contrôleur (16) de la machine agricole par le biais d'un système de bus de véhicule (20) de la machine agricole, le message comportant la classe de défaut lorsque la situation de défaut a été reconnue, et ne comportant pas de classe de défaut lorsqu'aucune situation de défaut n'a été reconnue, et l'interface d'émission étant configurée pour communiquer le message à des intervalles de temps réguliers.

2. Dispositif (14) selon la revendication 1, l'interface d'entrée (30) étant configurée pour recevoir le signal de capteur par le biais du système de bus de véhicule (20).

3. Dispositif (14) selon l'une des revendications précédentes,
- la règle d'affectation prédéfinie se basant sur un risque résultant de la situation de défaut pour la machine agricole (12) et pour des objets dans l'environnement de la machine agricole ; et
- un risque plus élevé conditionnant une classe de défaut plus élevée.

4. Dispositif (14) selon l'une des revendications précédentes, l'interface d'émission (36) étant configurée pour communiquer un message supplémentaire avant l'écoulement d'une période ordinaire lorsque deux situations de défaut sont reconnues.

5. Dispositif (14) selon l'une des revendications précédentes, l'interface d'entrée (30) étant configurée pour recevoir un message d'état du contrôleur (16) de la machine agricole (12) par le biais du système de bus de véhicule (20).

6. Dispositif (14) selon l'une des revendications précédentes,
- l'unité de traitement (32) étant configurée pour déterminer un lieu de défaut et/ou un type de défaut ;
- l'unité de classification (34) étant configurée pour affecter la situation de défaut reconnue à une classe de défaut en se basant sur le lieu de défaut déterminé et/ou le type de défaut déterminé ; et
- l'interface d'émission (36) étant configurée de préférence pour communiquer périodiquement le message avec le lieu de défaut déterminé et/ou la classe de défaut déterminée.

7. Dispositif (14) selon l'une des revendications précédentes,
- l'unité de classification (34) étant configurée pour déterminer une réaction de la machine agricole (12) à la situation de défaut reconnue ; et
- l'interface d'émission (36) étant configurée pour communiquer périodiquement le message avec la réaction déterminée.

8. Système (10) pour faire fonctionner en toute sécurité une machine agricole (12), pouvant fonctionner de manière autonome, comprenant :
- un dispositif (14) selon l'une des revendications 1 à 7 ;
- un capteur d'environnement (18) destiné à reconnaître des objets dans l'environnement de la machine agricole ; et
- un contrôleur (16) destiné à recevoir le message et à commander une unité de conduite autonome (22) et/ou un outil (24) de la machine agricole en se basant sur le message reçu.

9. Système (10) selon la revendication 8,
- le contrôleur (16) étant configuré pour prédéfinir un état de fonctionnement de la machine agricole (12) ;
- le contrôleur étant configuré pour passer d'un mode de fonctionnement autonome, dans lequel la machine agricole fonctionne de manière autonome, à un état de fonctionnement commandé à distance, dans lequel la machine agricole peut être commandée à distance, lorsque la classe de défaut satisfait une condition d'état prédéfinie.

10. Système (10) selon l'une des revendications 8 à 9,
- le contrôleur (16) étant configuré pour freiner la machine agricole (12) lorsque la classe de défaut satisfait une condition d'état prédéfinie ; et
- le contrôleur étant de préférence configuré pour déterminer une force de freinage en se basant sur la classe de défaut et pour freiner la machine agricole avec la force de freinage déterminée.

11. Système (10) selon l'une des revendications 8 à 10, comprenant une interface d'opérateur destinée à recevoir une saisie d'un opérateur,
- le contrôleur (16) étant configuré pour demander une instruction d'opérateur par le biais de l'interface d'opérateur lorsque la classe de défaut satisfait une condition d'état prédéfinie.

12. Système (10) selon l'une des revendications 8 à 11, comprenant un dispositif (14) selon la revendication 7, le contrôleur (16) étant configuré pour exécuter la réaction.

13. Machine agricole (12) pouvant fonctionner de manière autonome, comprenant :
- un système (10) selon l'une des revendications 8 à 12 ;
- un système de bus de véhicule (20) ;
- une unité de conduite autonome (22) destinée à faire bouger la machine agricole et/ou un outil (24) destiné à accomplir une tâche agricole, notamment un pulvérisateur agricole destiné à pulvériser une substance.

14. Procédé pour faire fonctionner en toute sécurité une machine agricole (12) pouvant fonctionner de manière autonome, la machine agricole (12) étant formée selon la revendication 13, comprenant les étapes suivantes :
- réception (S10) d'un signal de capteur d'un capteur d'environnement (18) au niveau de la machine agricole, avec des informations à propos d'objets dans l'environnement de la machine agricole ;
- reconnaissance (S12) d'une situation de défaut en se basant sur le signal de capteur ;
- affecter (S14) de la situation de défaut identifiée à une classe de défaut en se basant sur une règle d'affectation prédéfinie ; et
- communication périodique (S16) d'un message à un contrôleur (16) de la machine agricole par le biais d'un système de bus de véhicule (20) de la machine agricole, le message comportant la classe de défaut lorsque la situation de défaut a été reconnue, et ne comportant pas de classe de défaut lorsqu'aucune situation de défaut n'a été reconnue, et le message étant communiqué à des intervalles de temps réguliers.

15. Produit de programme informatique comprenant un code de programme destiné à mettre en œuvre les étapes du procédé selon la revendication 14 lorsque le code de programme est exécuté sur un ordinateur d'une machine agricole pouvant fonctionner de manière autonome selon la revendication 13.
